# FASCICULE DE BREVET EUROPEEN

(11) **EP 3 610 197 B1**
(45) Date de publication et mention de la délivrance du brevet: **02.06.2021**
(21) Numéro de dépôt: 18719964.1
(22) Date de dépôt: 11.04.2018
(51) Int. Cl.: F23R 3/06, F23R 3/14, F23R 3/22, F23R 3/26, F23N 5/04

(54) **FOYER DE TURBINE A GAZ A GEOMETRIE VARIABLE AUTO-ADAPTATIVE**
SELBSTADAPTIERENDE GASTURBINENFEUERKAMMER MIT VARIABLER GEOMETRIE
SELF-ADAPTING GAS TURBINE FIREBOX WITH VARIABLE GEOMETRY

(30) Priorité: 11.04.2017 FR 1753165
(43) Date de publication de la demande: 19.02.2020
(73) Titulaire: Office National d'Etudes et de Recherches Aérospatiales, 91120 Palaiseau (FR)
(72) Inventeur: GUIN, Christian, 91140 Villebon sur Yvette (FR); PAUN, Florin, 92130 Issy les Moulineaux (FR)
(74) Mandataire: Plasseraud IP
(86) Numéro de dépôt international: PCT/FR2018/050907
(87) Numéro de publication internationale: WO 2018/189481

(56) Documents cités:
- FR-A1- 2 452 599
- GB-A- 2 244 551
- US-A- 4 606 190
- US-A1- 2012 015 309
- US-A1- 2016 084 167

## Description

La présente invention concerne un foyer de turbine à gaz à géométrie variable auto-adaptative, ainsi qu'une turbomachine qui incorpore un tel foyer.

Il est connu que la combustion du carburant à l'intérieur de la chambre de combustion d'une turbomachine présente des caractéristiques d'émission de monoxyde de carbone, d'imbrulés et d'oxydes d'azote qui varient en fonction du régime de puissance de la turbomachine. Principalement, les émissions de monoxyde de carbone et d'imbrûlés augmentent fortement lorsque le régime de puissance diminue, et les émissions d'oxydes d'azote augmentent lorsque le régime de puissance devient plus élevé. Lorsque la turbomachine est un turboréacteur d'avion, un régime à forte puissance est utilisé au décollage puis en vol de croisière, alors qu'un régime à faible puissance est utilisé à l'atterrissage et pour le roulage au sol, et correspond aussi à des conditions de rallumage en vol du turboréacteur. Pour réduire ces émissions quel que soit le régime de puissance, il peut être envisagé d'utiliser des foyers de turbines à gaz à géométries variables. De tels foyers à géométries variables possèdent au moins une première entrée d'air de combustion qui débouche en amont dans la chambre de combustion, et au moins une seconde entrée d'air de combustion qui débouche en aval dans la même chambre de combustion. Alors l'introduction de l'air de combustion est augmentée en amont dans la chambre, et simultanément diminuée en aval, lorsque le régime de puissance augmente, produisant une combustion qui est plus pauvre en carburant. Inversement, l'introduction de l'air de combustion est diminuée en amont dans la chambre, et simultanément augmentée en aval, lorsque le régime de puissance diminue, produisant une combustion qui est plus riche en carburant. Par exemple, le document FR 2 779 807 propose d'utiliser un ou plusieurs clapets ou d'autres moyens d'obturation pour contrôler automatiquement un débit d'admission variable d'air de combustion dans la chambre de combustion, en fonction d'une pression d'air qui existe dans la turbomachine. Toutefois, la réalisation de la géométrie variable qui est décrite dans le document FR 2 779 807 est complexe, pénalisante en encombrement et en masse ainsi que difficilement compatible avec les conditions de température, de pression, de vibration et de vitesse d'écoulement de l'air qui existent dans une turbomachine.

Par ailleurs, le document FR 2 452 599 propose d'ajuster automatiquement des débits d'air de contournement de la chambre de combustion, pour refroidir des composants de la turbine, notamment ses aubes fixes et mobiles. L'ajustement automatique est réalisé en réponse à des paramètres tels que la pression ou la température de l'air qui est issu du compresseur de la turbomachine. Par exemple, des clapets sont portés par des bilames thermosensibles, pour varier des sections ouvertes de passage pour l'air qui provient du compresseur. L'ajustement qui est ainsi réalisé varie en fonction de la température de l'air de refroidissement, celui-ci provenant du compresseur. Toutefois, le concept et les dispositifs qui sont décrits dans le document FR 2 452 599 ne correspondent pas à des foyers à géométrie variable pour optimiser la combustion en fonction du régime de puissance. Un foyer de turbine à gaz ayant les caractéristiques du préambule de la vendication 1 est décrit par le document US 2012/015309.

A partir de cette situation, un but de la présente invention consiste à améliorer l'ajustement automatique d'une configuration de combustion dans un foyer de turbomachine, pour que les caractéristiques d'émission de monoxyde de carbone et d'oxydes d'azote, ainsi que le rendement énergétique de la turbomachine, soient optimisés pour différents régimes de puissance de celle-ci.

Un but annexe est d'obtenir un tel ajustement automatique qui soit simple, robuste par rapport aux conditions thermiques et vibratoires qui existent à proximité d'une chambre de combustion, et qui soit peu onéreux.

Pour cela, un premier aspect de l'invention propose un foyer de turbine à gaz qui comprend :
- une chambre de combustion ;
- un système d'alimentation en air, notamment en air sortant d'un compresseur, qui est disposé pour alimenter la chambre de combustion avec au moins un flux d'air qui possède une température variable ; et
- au moins un système à ouverture variable, comprenant lui-même :
   - un passage d'admission, qui est disposé pour laisser entrer dans la chambre de combustion le flux d'air provenant du système d'alimentation en air,
   - un élément d'obturation mobile, dont un déplacement modifie une section ouverte du passage d'admission ; et
   - un élément thermosensible, dont une forme varie en fonction d'une température de cet élément thermosensible, et qui est disposé dans le flux d'air entre le système d'alimentation en air et le passage d'admission, et qui est connecté à l'élément d'obturation de sorte qu'une déformation de l'élément thermosensible provoque le déplacement de l'élément d'obturation.

Le passage d'admission est agencé par rapport à la chambre de combustion de sorte que l'air qui entre dans cette chambre à travers ce passage d'admission soit de l'air qui participe à la combustion d'un carburant, ou de l'air qui participe à une dilution des gaz effective à l'intérieur de la chambre de combustion. De cette façon, le foyer de turbine est à géométrie variable, mais en plus auto-adaptative pour ajuster automatiquement la configuration de combustion à l'intérieur la chambre de combustion, en fonction de la puissance de régime de fonctionnement du foyer de turbine.

En particulier, une alternance peut être obtenue de cette façon, entre une première configuration de combustion pour régime de fonctionnement à faible puissance, avec une zone de flamme qui est riche en carburant, située en fond de chambre de combustion et suivie d'une zone de dilution, et une autre configuration de combustion pour régime de fonctionnement à forte puissance, dans laquelle la combustion est pauvre en carburant et sans zone de dilution.

L'air qui est concerné par l'invention, et dont le débit d'entrée dans la chambre de combustion est ajusté automatiquement en fonction de la température d'air qui existe en amont de la chambre de combustion, est de l'air qui participe à la combustion du carburant, ou à la dilution des gaz dans la chambre de combustion, ou les deux. Autrement dit, cet air dont le débit est ajusté selon l'invention permet de modifier la configuration - ou la géométrie - de la combustion qui est produite dans le foyer de turbine.

L'utilisation d'un élément thermosensible, dont la forme varie en fonction d'une température de cet élément, et qui est connecté mécaniquement à l'élément d'obturation pour déplacer ce dernier, constitue un dispositif d'ajustement qui est simple, robuste par rapport aux conditions thermiques et vibratoires qui existent à proximité de la chambre de combustion, et peu onéreux.

Dans des différents modes de réalisation de l'élément thermosensible, celui-ci peut comprendre une portion d'un alliage à mémoire de forme, ou bien un assemblage bilame thermosensible.

Dans des premiers modes de réalisation de l'élément thermosensible, l'alliage à mémoire de forme possède une phase dite «basse température», appelée martensite, et une phase «haute température», appelée austénite, et passe réversiblement d'une phase à l'autre à une température de transition qui est appelée température martensitique. La portion d'un tel alliage peut présenter des formes géométriques qui sont différentes entre les deux phases, si bien que la portion change de forme géométrique réversiblement lorsque sa température franchit la valeur de température martensitique, en augmentant ou en diminuant. Des compositions de tels alliages à mémoire de forme sont bien connues de l'Homme du métier et répertoriées par ailleurs en détail. On ne citera à titre d'exemples que les familles d'alliages titane-nickel et cuivre-aluminium, désignées par les composants principaux de ces alliages.

Dans des seconds modes de réalisation de l'élément thermosensible, l'assemblage bilame est constitué par au moins deux portions de matériaux qui ont des valeurs respectives différentes d'un coefficient de dilatation thermique, et qui sont connectées l'une à l'autre. Ainsi, une variation dimensionnelle relative des deux portions de matériaux, qui est provoquée par une variation de température subie par l'élément thermosensible, produit la déformation de ce dernier. Dans certains modes de réalisation qui sont adaptés aux températures très élevées, les deux portions de matériaux de l'assemblage bilame peuvent être soudées l'une sur l'autre par laminage à froid.

Dans des premiers modes de réalisation du système à ouverture variable, l'élément thermosensible peut être adapté pour actionner lui-même réversiblement l'élément d'obturation. Autrement dit, il peut être adapté pour fournir d'abord une énergie qui est suffisante pour provoquer le déplacement de l'élément d'obturation à partir d'une position initiale quelconque, lorsque cet élément thermosensible subit une première variation de température à partir d'une valeur initiale de température. Mais il est aussi adapté pour fournir ensuite une énergie supplémentaire qui est suffisante pour provoquer un déplacement inverse de l'élément d'obturation lorsque cet élément thermosensible subit une seconde variation de température, à la suite de la première variation de température et opposée à celle-ci, de sorte que l'élément d'obturation se trouve de nouveau dans sa position initiale lorsque la température de l'élément thermosensible est de nouveau égale à sa valeur initiale.

Dans des seconds modes de réalisation du système à ouverture variable, l'élément thermosensible peut être adapté pour n'actionner par lui-même l'élément d'obturation que dans un seul sens. Il doit alors être combiné avec un organe de rappel, pour que ce dernier déplace l'élément d'obturation en sens inverse, d'une façon qui est limitée par l'élément thermosensible. Autrement dit, l'élément thermosensible peut encore être adapté pour fournir une énergie suffisante pour provoquer le déplacement de l'élément d'obturation à partir d'une position initiale, lorsqu'il subit une première variation de température à partir d'une valeur initiale de température. Mais c'est l'organe de rappel qui produit l'énergie supplémentaire pour le déplacement inverse de l'élément d'obturation lorsque l'élément thermosensible subit la seconde variation de température, à la suite de et opposée à la première variation de température, de sorte que l'élément d'obturation se trouve de nouveau dans sa position initiale lorsque la température de l'élément thermosensible est de nouveau égale à sa valeur initiale.

Un premier type de réalisations de l'invention concerne l'ajustement de l'air de combustion qui est admis dans la chambre de combustion, dans une partie amont de celle-ci. Pour ce premier type de réalisations, le système à ouverture variable peut être disposé sur une vrille d'alimentation en air du système d'injection de la chambre de combustion, pour faire varier un débit d'entrée d'air de combustion qui provient du système d'alimentation en air et qui pénètre dans la chambre de combustion à travers cette vrille d'alimentation en air. Celle-ci est située axialement en amont de la chambre de combustion, par rapport à un sens d'écoulement général de l'air dans la chambre de combustion en fonctionnement. Selon l'invention, l'élément d'obturation comprend une couronne à ouvertures qui entoure latéralement la vrille d'alimentation en air, de sorte que les ouvertures soient alignées ou décalées par rapport à des canaux de la vrille d'alimentation en air, afin de faire varier une section d'accès aux canaux, selon un angle de position de la couronne autour de la vrille d'alimentation en air. La section variable qui est ainsi réalisée pour l'accès aux canaux de la vrille d'alimentation en air, forme la section ouverte du passage d'admission.

Avantageusement, le système à ouverture variable peut alors être agencé pour réduire la section ouverte du passage d'admission lorsque la température de l'air qui provient du système d'alimentation en air diminue, et pour augmenter cette section ouverte du passage d'admission lorsque cette température d'air augmente. Le cas de la température d'air d'alimentation qui a diminué correspond à un régime de fonctionnement qui est devenu à plus faible puissance pour une turbomachine qui comprend le foyer de turbine, et le cas de cette température d'air qui a augmenté correspond à un régime de fonctionnement qui est devenu à plus forte puissance.

Ce premier type de réalisations de l'invention peut être combiné avec les premiers ou les seconds modes de réalisation de l'élément thermosensible qui ont été cités plus haut, et aussi avec les premiers ou les seconds modes de réalisation du système à ouverture variable qui ont aussi été cités plus haut, toutes les combinaisons étant comprises dans l'invention.

En particulier, l'élément thermosensible peut constituer au moins une partie d'une aube qui est portée par la couronne, en étant située dans le flux d'air provenant du système d'alimentation en air. Il peut alors être adapté pour conférer à l'aube des inclinaisons et/ou des sens de courbure qui sont inverses entre au moins deux valeurs de la température de l'air qui provient du système d'alimentation en air, de façon à faire tourner la couronne par effort aérodynamique dans un sens ou dans le sens opposé autour de la vrille d'alimentation en air.

Alternativement, la couronne peut porter au moins une aube qui est située dans le flux d'air provenant du système d'alimentation en air, et qui possède une inclinaison ou une courbure fixe de façon à faire tourner la couronne par effort aérodynamique vers une position de repos, pour former l'organe de rappel. Alors, l'élément thermosensible peut être disposé pour écarter la couronne de la position de repos, en la faisant tourner à l'encontre de l'organe de rappel.

Un second type de réalisations de l'invention concerne l'ajustement de l'air de dilution qui est introduit dans la chambre de combustion, dans une partie aval de celle-ci. Pour ce second type de réalisations, le système à ouverture variable peut être disposé pour faire varier un débit d'entrée d'air de dilution qui provient du système d'alimentation en air et qui pénètre dans la chambre de combustion à travers une paroi latérale de celle-ci, par rapport à un écoulement général de l'air dans la chambre de combustion en fonctionnement.

Avantageusement, le système à ouverture variable peut alors être agencé pour augmenter ou produire la section ouverte du passage d'admission lorsque la température de l'air qui provient du système d'alimentation en air diminue, et pour réduire ou supprimer cette section ouverte du passage d'admission lorsque cette température d'air augmente. Le cas de la température d'air d'alimentation qui a diminué (resp. a augmenté) correspond encore à un régime de fonctionnement qui est devenu à puissance plus faible (resp. plus forte).

Ce second type de réalisations de l'invention peut aussi être combiné avec les premiers ou les seconds modes de réalisation de l'élément thermosensible qui ont été cités plus haut, et avec les premiers ou les seconds modes de réalisation du système à ouverture variable qui ont aussi été cités plus haut, toutes les combinaisons étant encore comprises dans l'invention.

En particulier, l'élément thermosensible peut constituer une partie d'un levier qui porte l'élément d'obturation, ou une partie d'un actionneur réversible qui est agencé pour déplacer l'élément d'obturation. Dans ce dernier cas, l'élément thermosensible peut constituer au moins une partie d'une aube qui est située dans le flux d'air provenant du système d'alimentation en air. L'élément thermosensible est alors adapté pour conférer à l'aube des inclinaisons ou des sens de courbure qui sont inverses entre au moins deux valeurs de la température de l'air qui provient du système d'alimentation en air, de façon à déplacer l'élément d'obturation par effort aérodynamique dans un sens ou dans le sens opposé afin de varier réversiblement la section ouverte du passage d'admission.

Alternativement, un levier qui porte l'élément d'obturation peut porter en outre au moins une aube qui est située dans le flux d'air provenant du système d'alimentation en air, et qui possède une inclinaison ou une courbure fixe de façon à faire tourner le levier par effort aérodynamique vers une position de repos, pour former l'organe de rappel. L'élément thermosensible peut alors être disposé pour écarter le levier de la position de repos, en faisant tourner le levier à l'encontre de l'organe de rappel.

Possiblement, un foyer de turbine selon l'invention peut combiner des ajustements de l'air de combustion et de l'air de dilution, en comprenant à la fois un premier système à ouverture variable qui est conforme au premier type de réalisations de l'invention, et un second système à ouverture variable qui est conforme au second type de réalisations de l'invention. Les premier et second systèmes à ouvertures variables sont alors adaptés pour varier simultanément la section ouverte du passage d'admission du premier système à ouverture variable, et celle du second système à ouverture variable, selon des sens de variation qui sont opposés lorsque varie la température du flux d'air dans lequel sont disposés les éléments thermosensibles des deux systèmes à ouvertures variables. Préférablement, les sections ouvertes des deux passages d'admission varient simultanément de sorte qu'un débit massique total d'air qui entre dans la chambre de combustion reste sensiblement constant lors des variations simultanées des deux systèmes à ouvertures variables. En outre, une perte totale de charge qui est effective pour ce débit total d'air admis dans la chambre de combustion, peut avantageusement aussi être constante lors des variations simultanées des deux systèmes à ouvertures variables.

De plus, l'utilisation d'éléments thermosensibles de même nature dans les systèmes à ouvertures variables qui sont disposés dans les parties amont et aval de la chambre de combustion garantit une synchronisation automatique des modifications des débits d'air qui sont contrôlés par ces systèmes.

Un second aspect de l'invention propose une turbomachine qui comprend un compresseur d'air, un foyer de turbine qui est conforme au premier aspect de l'invention, et une turbine. Une telle turbomachine est agencée de sorte que le compresseur constitue une source d'air pour le système d'alimentation en air du foyer de turbine, et que des gaz qui sont issus du foyer de turbine actionnent la turbine, la turbine entraînant le compresseur.

Une telle turbomachine est particulièrement adaptée pour former une partie d'un turboréacteur d'avion de ligne de transport commercial. Les régimes de puissance évoqués correspondent alors à des phases de vol différentes : décollage et vol de croisière pour les régimes de fonctionnement à forte puissance, atterrissage et roulage au sol, ainsi que rallumage en vol, pour les régimes de fonctionnement à faible puissance.

D'autres particularités et avantages de la présente invention apparaîtront dans la description ci-après de plusieurs exemples de réalisation non limitatifs, en référence aux dessins annexés, dans lesquels :
- la figure 1 est une vue en section transversale d'une turbomachine à laquelle peut être appliquée l'invention ;
- la figure 2a est une vue en perspective d'une vrille d'alimentation en air de combustion, qui est combinée avec un premier mode de réalisation d'un système à ouverture variable utilisé par l'invention ;
- la figure 2b est une vue en section transversale de la vrille d'alimentation et du système à ouverture variable de la figure 2a, pour deux valeurs d'ouverture différentes ;
- la figure 2c est une vue de détail d'une partie de la figure 2a, pour un mode de réalisation alternatif d'éléments thermosensibles ;
- la figure 2d correspond à la figure 2a pour un second mode de réalisation du système à ouverture variable utilisé par l'invention ;
- les figures 3a-3d sont des vues en coupe ou en perspective qui représentent d'autres exemples de réalisation de l'invention, pour une entrée d'air de dilution ; et
- la figure 4 est une vue en perspective d'un foyer de turbine qui est conforme à l'invention à la fois au niveau de la vrille d'alimentation en air de combustion, et au niveau d'une entrée d'air de dilution.

Pour raison de clarté, les dimensions des éléments qui sont représentés dans ces figures ne correspondent ni à des dimensions réelles, ni à des rapports de dimensions réels, ni à des formes exactes lorsque ces formes ne dépendent pas de l'invention. De plus, certains éléments des dispositifs décrits ne sont représentés que symboliquement ou que dans leur principe, ou bien ne sont pas représentés, lorsqu'ils ne participent pas directement à la mise en oeuvre de l'invention. Tel est le cas, notamment, du système d'injection de carburant qui est situé au centre de la vrille d'alimentation en air, mais qui n'a pas été représenté pour rendre plus visible les parties directement liées à l'invention. En outre, des références identiques qui sont indiquées dans des figures différentes désignent des éléments identiques ou qui ont des fonctions identiques.

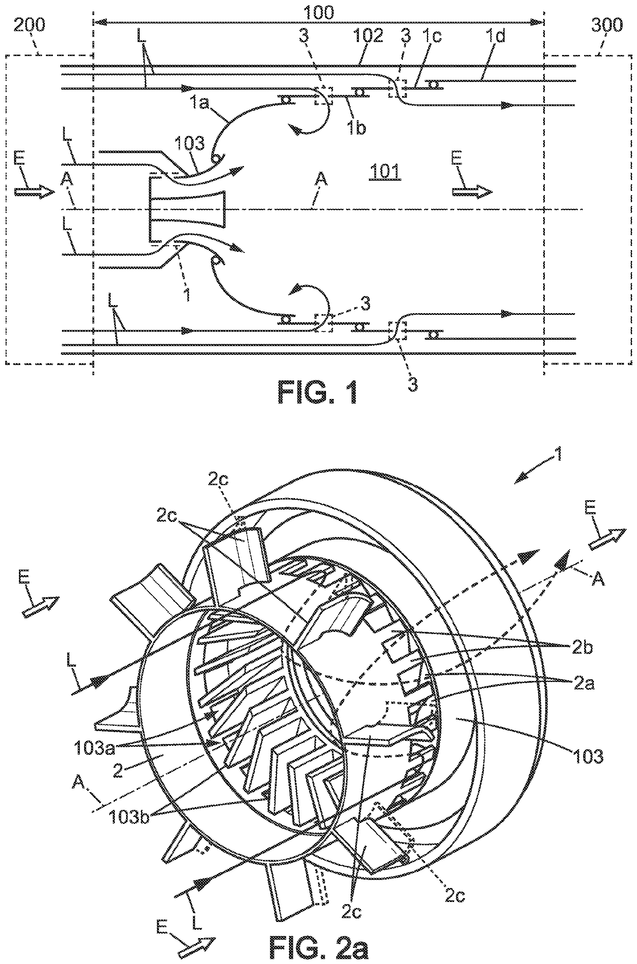

L'invention peut être appliquée à une turbomachine telle que représentée à la figure 1. Une telle turbomachine comprend un foyer de turbine 100, un compresseur 200 et une turbine 300.

Le foyer de turbine 100 comprend lui-même une chambre de combustion 101, un système d'alimentation en air, et au moins deux systèmes à ouvertures variables.

La chambre de combustion 101 peut avoir différentes conceptions, telles que, par exemple, une chambre à paroi latérale qui est constituée par une succession de plusieurs anneaux 1a, 1b, 1c et 1d. Dans d'autres conceptions de la chambre de combustion 101, sa paroi latérale peut être poreuse ou comporter des perforations multiples.

Le système d'alimentation en air comprend au moins une conduite externe 102 pour guider l'air qui est issu du compresseur 200 vers des entrées d'air de la chambre à combustion 101. Les flèches qui sont référencées par la lettre E dans la figure 1 désignent le sens d'écoulement général de l'air dans la turbomachine, du compresseur 200 à la turbine 300 à travers la chambre de combustion 100. Les références L désignent des lignes de courant de l'air. En fonction d'une altitude à laquelle se trouve un avion qui est équipé de la turbomachine, et d'un régime de fonctionnement de la turbomachine, par exemple un fonctionnement à forte puissance pour un décollage de l'avion, ou bien un fonctionnement à faible puissance pour un roulage de l'avion au sol ou un redémarrage à froid de la turbomachine, la température de l'air qui est issu du compresseur 200 peut varier entre -40°C environ et 630°C environ.

Un système à ouverture variable est disposé sur le chemin d'écoulement de l'air entre le système d'alimentation et certaines entrées d'air la chambre de combustion 101. En particulier, un système à ouverture variable 1 peut être disposé axialement à travers la paroi amont de la chambre de combustion 101, pour ajuster un flux d'air de combustion, appelé flux d'air primaire dans le jargon de l'Homme du métier. En combinaison, un ou plusieurs système(s) à ouverture(s) variable(s) 3 peut (peuvent) être disposé(s) à travers certains des segments 1a-1d de la paroi latérale de la chambre de combustion 101, chacun de ces derniers systèmes étant destinés à ajuster un flux d'air de dilution. L'ensemble de ces systèmes à ouvertures variables 1 et 3 est réglé pendant le fonctionnement de la turbomachine en fonction de son régime de fonctionnement, correspondant à une puissance délivrée qui est faible ou forte. En particulier, lorsque cette puissance augmente, le système à ouverture variable 1 est réglé pour augmenter le flux d'air primaire, et les systèmes 3 sont réglés simultanément pour réduire ou supprimer la dilution de la flamme de combustion. A l'inverse, le système à ouverture variable 1 est réglé pour réduire le flux d'air primaire, et les systèmes à ouvertures variables 3 sont simultanément réglés pour augmenter la dilution de la flamme, lorsque la puissance qui est délivrée par la turbomachine diminue. Les réglages des systèmes à ouvertures variables 1 et 3 sont préférablement prévus pour que le débit massique total d'air qui entre dans la chambre de combustion 101 et la perte de charge de l'écoulement restent sensiblement constants lors de la transition de géométrie du foyer.

Selon l'invention, l'un au moins des systèmes à ouverture variable 1 et/ou 3 est ajusté automatiquement et de façon autonome en fonction de la température de l'air dans la conduite 102 en amont de ce(s) système(s) à ouverture(s) variable(s).

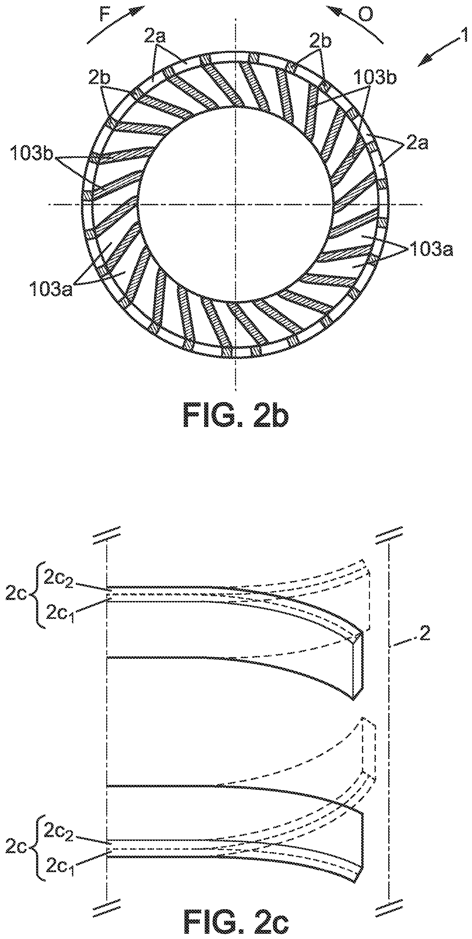

L'invention est maintenant décrite en premier lieu pour le système à ouverture variable 1, en référence à la figure 2a. Le système d'alimentation en air comprend alors une vrille («swirler» en anglais) d'alimentation 103. Cette vrille d'alimentation comporte des canaux 103a pour l'air de combustion, qui débouchent à travers la paroi amont de la chambre de combustion 101, aussi appelée paroi de fond de chambre de combustion. Deux canaux 103a qui sont voisins dans la couronne 103 sont séparés par une cloison intermédiaire 103b, aussi appelée aubage. Des ouvertures périphériques externes des canaux 103a sont réparties autour d'un axe A-A. Elles forment un passage d'admission pour laisser entrer l'air qui est issu du compresseur 200 dans la chambre d'admission 101. Selon l'invention, une couronne à ouvertures 2 est placée autour de la vrille 103, devant les ouvertures périphériques externes des canaux 103a, en pouvant être tournée autour de l'axe A-A entre deux butées de limitation de rotation. Dans la couronne 2, des ouvertures 2a sont alternées avec des segments d'obturation 2b au niveau des ouvertures périphériques externes des canaux 103a de la vrille d'alimentation 103. Alors, dans une position de la couronne 2 qui correspond à une section d'accès maximale aux canaux 103a de la vrille 103 pour l'air qui est issu du compresseur 200, les ouvertures 2a de la couronne 2 coïncident avec celles des canaux 103a de la vrille 103. Une telle position de la couronne 2 qui produit la section d'accès maximale est représentée dans la moitié gauche de la figure 2b. Lorsque la couronne 2 est tournée progressivement à partir de cette position, les segments d'obturation 2b viennent partiellement devant les ouvertures périphériques externes des canaux 103a de la vrille 103, et réduisent ainsi la section d'accès aux canaux 103a pour l'air qui est issu du compresseur 200. Une telle autre position de la couronne 2 qui produit une section d'accès réduite est représentée dans la moitié droite de la figure 2b. Le flux d'air primaire qui entre dans la chambre de combustion 101 est ainsi ajusté par rotation de la couronne 2 autour de l'axe A-A. Ainsi, la couronne 2 forme l'élément d'obturation qui a été évoqué dans la partie générale de la présente description. Les sens de rotation notés O et F sur la figure 2b pour la couronne 2 correspondent respectivement à l'augmentation progressive et la réduction progressive de la section d'accès aux canaux 103a de la vrille 103, et par suite à l'augmentation et la réduction, respectivement, de la section d'ouverture du passage d'admission à la chambre de combustion 101 pour le flux d'air primaire.

Selon un premier mode de réalisation de l'invention qui est encore illustré par la figure 2a, la couronne 2 est pourvue d'aubes 2c, par exemple en amont des ouvertures 2a et des segments d'obturation 2b. Ces aubes 2c sont situées dans le flux d'air qui est issu du compresseur 200 avant que ce flux pénètre partiellement dans les canaux 103a de la vrille 103 ou s'écoule autour de la chambre de combustion 101. Les aubes 2c sont constituées au moins en partie par un alliage à mémoire de forme, de sorte qu'elles présentent chacune une courbure de sens variable. Par exemple, lorsque l'air en amont de la vrille 103 possède une température supérieure à la température martensitique de l'alliage à mémoire de forme, la courbure des aubes 2c (profils d'aubes indiqués en traits pleins dans la figure 2a) est telle que l'écoulement d'air qui est issu du compresseur 200 pousse la couronne 2 dans le sens de rotation O indiqué sur la figure 2b, pour augmenter la section d'accès aux canaux 103a de la vrille 103. A l'inverse, lorsque la température d'air est inférieure à la température martensitique, le sens de courbure des aubes 2c est inversé (profils d'aubes indiqués en traits interrompus dans la figure 2a) de sorte que l'écoulement d'air qui est issu du compresseur 200 pousse la couronne 2 dans le sens de rotation F indiqué sur la figure 2b, pour réduire la section d'accès aux canaux de la vrille 103. Dans ce premier mode de réalisation, les aubes 2c en alliage à mémoire de forme constituent l'élément thermosensible évoqué dans la partie générale de la présente description. Elles permettent d'ajuster automatiquement et réversiblement la section d'accès aux canaux 103a de la vrille 103, en provoquant une rotation de la couronne 2 dans le sens F lorsque la température de l'air qui est issu du compresseur 200 devient inférieure à la température martensitique, et dans le sens O lorsque cette température d'air devient supérieure à la température martensitique.

La figure 2c illustre un mode de réalisation alternatif, dans lequel chaque aube 2c de la couronne 2 est constituée par un assemblage bilame dans sa partie à courbure inversible. Un tel assemblage peut être constitué par deux segments 2c₁ et 2c₂ qui sont laminés ensemble, par exemple à froid, de façon à former chacun une partie de l'épaisseur de la partie d'aube à courbure inversible. Le segment qui est concave à plus faible température, par exemple le segment 2c₁ pour les profils d'aubes qui sont indiqués en traits continus dans la figure 2c, est constitué d'un matériau qui possède une valeur de coefficient de dilatation thermique supérieure à celle du matériau de l'autre segment, 2c₂ dans l'exemple considéré. Un choix approprié des matériaux des segments 2c₁ et 2c₂, et de leurs épaisseurs, à la portée de l'Homme du métier, permet d'obtenir une courbure de chaque aube 2c qui devient inverse à haute température (profils d'aubes indiqués en traits interrompus dans la figure 2c).

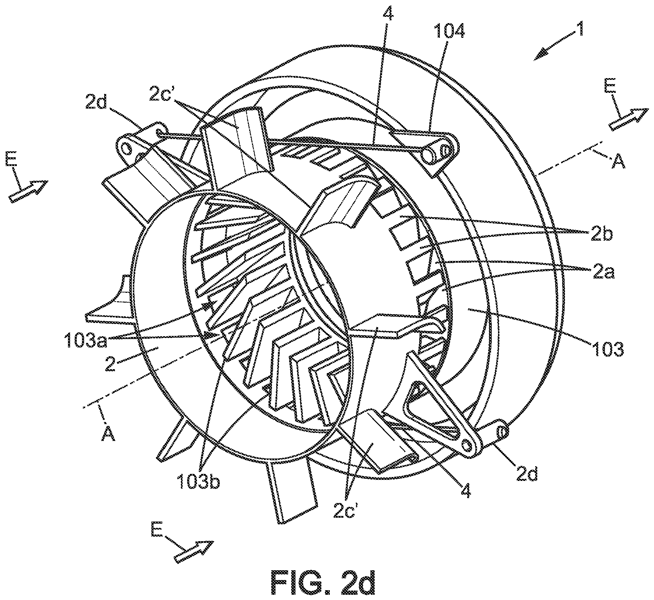

Dans un deuxième mode de réalisation de l'invention qui est illustré par la figure 2d, les aubes de la couronne 2, maintenant référencées 2c', ont des courbures fixes dans l'écoulement d'air qui est issu du compresseur, pour pousser la couronne 2 dans le sens de rotation O. La couronne 2 et le système d'alimentation en air sont alors pourvus de bras 2d et 104, respectivement, qui sont reliés un-à-un par un câble en alliage à mémoire de forme 4. Le câble 4 peut être conçu pour posséder, à une température supérieure à la température martensitique, une longueur effective qui est plus grande que celle effective en dessous de la température martensitique. Ainsi, une élévation de la température de l'air qui est issu du compresseur 200, jusqu'au-dessus de la température martensitique, libère la couronne 2 en rotation pour que les aubes 2c' provoquent sa rotation dans le sens O. A l'inverse, une re-décroissance de la température d'air en dessous de la température martensitique provoque un raccourcissement du câble 4, qui provoque une rotation de la couronne 2 dans le sens F. Autrement dit, les aubes 2c' constituent un organe de rappel pour ramener la couronne 2, sous l'effort aérodynamique qui est produit par le flux d'air E sur les aubes 2c', dans la position qui correspond à la section ouverte la plus grande pour le passage d'admission de l'air du flux primaire à la chambre de combustion 101.

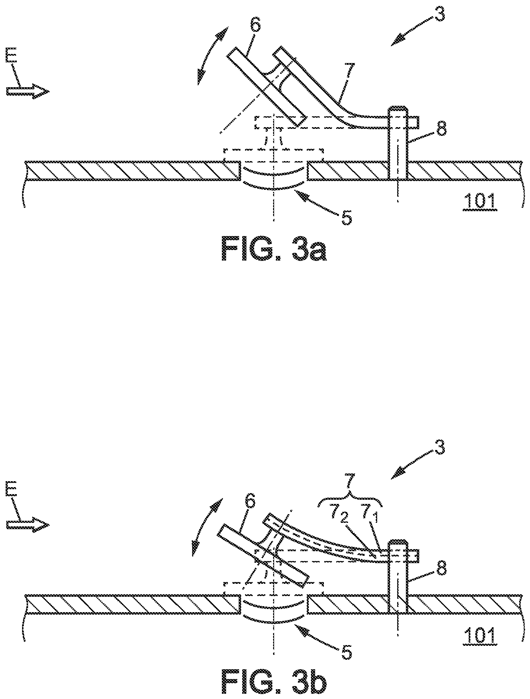

Les troisièmes modes de réalisation de l'invention qui sont décrits maintenant en référence aux figures 3a et 3b, concernent l'un de ces systèmes à ouvertures variables 3 qui est installé sur la paroi latérale de la chambre de combustion 101, dans une partie aval de celle-ci. Comme déjà dit, un tel système est destiné à adapter un débit d'air de dilution qui est admis dans la chambre de combustion 101, en fonction du régime de puissance qui est en cours pour la turbomachine. La paroi latérale de la chambre de combustion 101 est munie d'un orifice 5, et un clapet 6, faisant office d'élément d'obturation, est supporté par une embase 8 par l'intermédiaire d'un levier 7. L'embase 8 est de préférence réalisée dans un matériau isolant thermiquement et solidaire de la paroi latérale de la chambre de combustion 101. Le levier 7 est situé dans l'écoulement d'air E qui est issu du compresseur 200. Il est conçu pour appliquer le clapet 6 sur l'orifice 5 lorsque la température de l'air issu du compresseur 200 est élevée, correspondant à un régime de fonctionnement à forte puissance de la turbomachine, et pour écarter le clapet 6 de l'orifice 5 lorsque la température de l'air issu du compresseur 200 est plus faible, correspondant à un régime de fonctionnement à faible puissance. Ainsi, un flux d'air de dilution pénètre dans la chambre de combustion 101 pour le régime à faible puissance, et est supprimé pour le régime à forte puissance.

Dans le mode de réalisation qui est illustré par la figure 3a, un segment au moins du levier 7 est constitué par une portion d'alliage à mémoire de forme, telle que le levier 7 soit coudé dans la phase martensite pour écarter le clapet 6 de l'orifice 5, et soit droit dans la phase austénite pour appliquer le clapet 6 sur l'orifice 5. Evidemment, d'autres configurations géométriques peuvent être utilisées de façon équivalente pour le levier 7 et l'embase 8.

Dans un mode de réalisation alternatif à celui de la figure 3a, et qui est illustré par la figure 3b, la portion d'alliage à mémoire de forme qui constitue le levier 7 est remplacée par un assemblage bilame thermosensible tel que décrit en référence à la figure 2c. Les segments de cet assemblage bilame sont référencés 7₁ et 7₂. Le segment 7₁, qui possède une valeur de coefficient de dilatation thermique supérieure à celle du segment 7₂, constitue la face du levier 7 qui est concave à plus faible température, ou une partie au moins de cette face. Les deux segments 7₁ et 7₂ du levier 7 sont dimensionnés en épaisseur, et leurs matériaux respectifs sont choisis, d'une façon qui est à la portée de l'Homme du métier, pour que le fonctionnement de l'assemblage bilame produise réversiblement l'application du clapet 6 sur l'orifice 5 lorsque la température de l'air qui est issu du compresseur 200 est élevée, et l'écartement du clapet 6 par rapport à l'orifice 5 lorsque cette température d'air décroît.

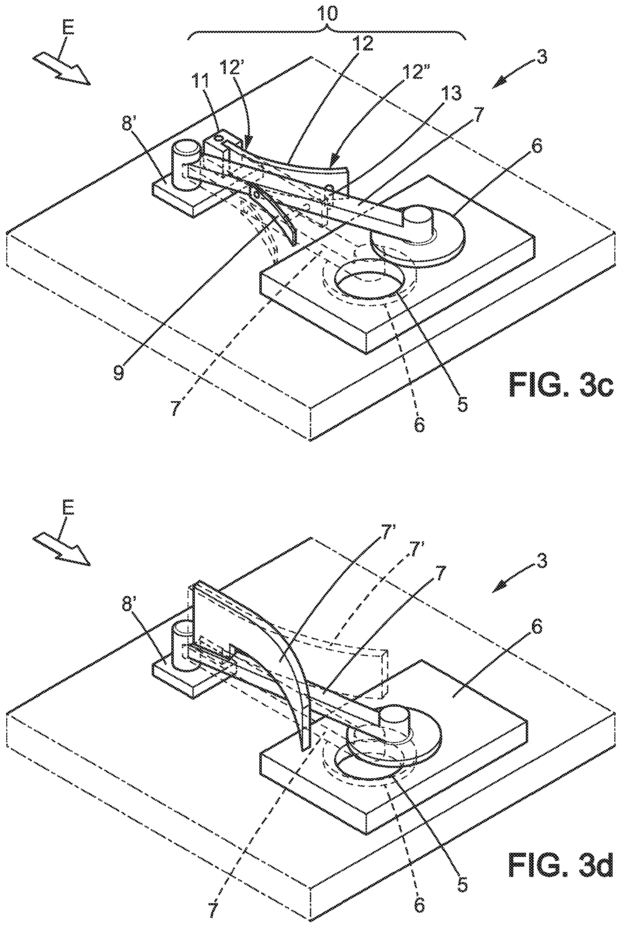

Dans un troisième mode de réalisation de l'invention qui est illustré par la figure 3c, l'embase 8' est configurée pour permettre au levier 7 de tourner dans un plan parallèle à la surface latérale extérieure de la chambre de combustion 101. Ainsi, le clapet 6, qui est porté par le levier 7, glisse sur la surface latérale extérieure de la chambre de combustion 101 entre une position qui est décalée par rapport à l'orifice 5 (représentée en traits continus), de sorte que cet orifice est alors ouvert, et une position dans laquelle le clapet 6 obture l'orifice 5 (représentée en traits interrompus). Le levier 7 porte rigidement une ailette courbe 9, de forme fixe, qui est située dans l'écoulement d'air E issu du compresseur 200. De cette façon, le levier 7 est ramené dans la position d'ouverture de l'orifice 5 par l'effort aérodynamique qui est produit par le flux d'air E sur l'ailette 9. L'ailette 9 dans l'écoulement d'air E forme ainsi un organe de rappel du système à ouverture variable vers la position d'ouverture de l'orifice 5. Cette position d'ouverture correspond à la position de repos évoquée dans la partie générale de la présente description. Un actionneur 10 comprend une autre embase 11, qui peut aussi être fixée sur la paroi de la chambre de combustion 101, un autre levier 12 qui est tenu rigidement à une extrémité de fixation 12' dans l'embase 11, et un doigt de poussée 13. Le doigt de poussée 13 est fixé à une extrémité distale 12" du levier 12, qui est opposée à l'extrémité de fixation 12'. Le levier 12 peut être constitué d'une portion d'alliage à mémoire de forme qui est conçue de sorte que, dans la phase martensite, le levier 12 ait une forme en retrait (représentée en traits pleins dans la figure 3c) pour permettre à l'ailette 9 de pousser le clapet 6 dans la position qui est écartée par rapport à l'orifice 5. Le levier 12 est simultanément conçu pour que, lors de sa transition vers sa phase austénite, il pousse le levier 7 par l'intermédiaire du doigt 13, jusqu'à amener le clapet 6 au-dessus de l'orifice 5, de façon à obturer ce dernier.

Dans un mode de réalisation alternatif à celui de la figure 3c, la portion d'alliage à mémoire de forme qui constitue le levier 12 de l'actionneur 10 peut être remplacée par un assemblage bilame tel que décrit en référence à la figure 2c. Un tel mode de réalisation apparaîtra clairement à l'Homme du métier à la lumière des descriptions qui ont déjà été fournies, si bien qu'il n'est pas nécessaire de le décrire plus.

Encore un autre mode de réalisation alternatif est illustré par la figure 3d. Par rapport au mode de réalisation de la figure 3c, l'actionneur 10 est supprimé, et une aube à inclinaison et/ou courbure inversible 7' est portée par le levier 7. L'aube 7' peut être constituée par une portion d'un alliage à mémoire de forme comme décrit pour les aubes 2c du mode de réalisation de la figure 2a, ou bien être constituée par un assemblage bilame thermosensible comme décrit pour les aubes 2c' du mode de réalisation de la figure 2c. Un tel autre mode de réalisation apparaîtra aussi clairement à l'Homme du métier à la lumière des descriptions qui ont déjà été fournies en référence à ces figures antérieures. L'inversion de l'inclinaison et/ou de la courbure de l'aube 7' permet d'ouvrir l'orifice 5 ou d'augmenter sa section ouverte lorsque la température d'air de l'écoulement E décroît, et réversiblement de réduire cette section ouverte ou la supprimer lorsque la température d'air de l'écoulement E croît. Comme pour tous les modes de réalisation de l'invention, un tel fonctionnement est autonome.

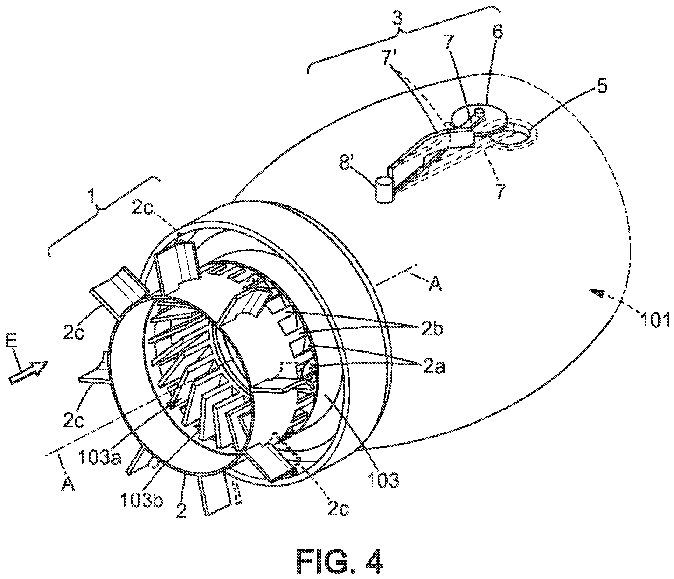

Les modes de réalisation de l'invention qui correspondent aux figures 2a-2c, ou à la figure 3d, quel que soit le mode de réalisation des éléments thermosensibles, à portion d'alliage à mémoire de forme ou à assemblage bilame, sont préférés pour leur simplicité, notamment du fait du nombre réduit de pièces qu'ils mettent en œuvre. La figure 4 montre une combinaison de deux de ces modes de réalisation : l'un conforme aux figures 2a-2c, et l'autre conforme à la figure 3d. Une telle combinaison est en effet particulièrement simple à réaliser, puis à utiliser avec un niveau de fiabilité qui est élevé. En outre, chaque système à ouverture variable est avantageusement dimensionné pour que le débit massique total d'air qui entre dans la chambre 101, en tant qu'air de combustion par le système à ouverture variable 1 ou en tant qu'air de dilution par le système à ouverture variable 3, reste sensiblement constant lors des transitions puisque les sections ouvertes des systèmes à ouvertures variables 1 et 3 varient en sens opposés, en conservant une section ouverte totale qui est sensiblement constante.

## Revendications

1. Foyer de turbine à gaz à géométrie variable auto-adaptative comprenant :
- une chambre de combustion (101) ;
- un système d'alimentation en air, notamment en air sortant d'un compresseur (200), disposé pour alimenter la chambre de combustion (101) avec au moins un flux d'air qui possède une température variable ; et
- au moins un système à ouverture variable, comprenant :
. un passage d'admission disposé pour laisser entrer dans la chambre de combustion (101) le flux d'air provenant du système d'alimentation en air,
. un élément d'obturation mobile, dont un déplacement modifie une section ouverte du passage d'admission ; et
. un élément thermosensible, dont une forme varie en fonction d'une température dudit élément thermosensible, l'élément thermosensible étant disposé dans le flux d'air entre le système d'alimentation en air et le passage d'admission, et étant connecté à l'élément d'obturation de sorte qu'une déformation de l'élément thermosensible provoque le déplacement dudit élément d'obturation,
dans lequel le passage d'admission est agencé par rapport à la chambre de combustion (101) de sorte que l'air qui entre dans ladite chambre de combustion à travers ledit passage d'admission soit de l'air qui participe à la combustion d'un carburant dans la chambre de combustion, ou de l'air qui participe à une dilution des gaz effective à l'intérieur de la chambre de combustion, de sorte que le foyer de turbine soit auto-adaptatif pour ajuster automatiquement une configuration de la combustion à l'intérieur la chambre de combustion, en fonction d'une puissance de régime de fonctionnement du foyer de turbine, dans lequel le système à ouverture variable est disposé pour faire varier un débit d'entrée d'air de combustion qui provient du système d'alimentation en air et qui pénètre dans la chambre de combustion (101) à travers une vrille (103) d'alimentation en air située axialement en amont de ladite chambre de combustion, par rapport à un sens (E) d'écoulement général de l'air dans la chambre de combustion en fonctionnement, **caractérisé en ce que** l'élément d'obturation comprend une couronne (2) à ouvertures (2a) qui entoure latéralement la vrille d'alimentation en air, de sorte que les ouvertures soient alignées ou décalées par rapport à des canaux (103a) de ladite la vrille (103) d'alimentation en air, afin de faire varier une section d'accès auxdits canaux, formant la section ouverte du passage d'admission, selon un angle de position de la couronne autour de la vrille d'alimentation en air.

2. Foyer de turbine selon la revendication 1, dans lequel l'élément thermosensible comprend une portion d'un alliage à mémoire de forme, ou comprend un assemblage bilame thermosensible, ledit assemblage bilame étant constitué par au moins deux portions (2c₁, 2c₂ ; 7₁ ; 7₂) de matériaux qui ont des valeurs respectives différentes d'un coefficient de dilatation thermique, et qui sont connectées l'une à l'autre de sorte qu'une variation dimensionnelle relative desdites deux portions de matériaux, provoquée par une variation de température subie par l'élément thermosensible, produise la déformation dudit élément thermosensible.

3. Foyer de turbine selon la revendication 1 ou 2, dans lequel l'élément thermosensible est adapté pour fournir une énergie suffisante pour provoquer le déplacement de l'élément d'obturation à partir d'une position initiale quelconque, lorsque ledit élément thermosensible subit une première variation de température à partir d'une valeur initiale de température, et est aussi adapté pour fournir ensuite une énergie supplémentaire qui est suffisante pour provoquer un déplacement inverse de l'élément d'obturation lorsque ledit élément thermosensible subit une seconde variation de température, à la suite de la première variation de température et opposée à ladite première variation de température, de sorte que l'élément d'obturation se trouve de nouveau dans la position initiale lorsque la température de l'élément thermosensible est de nouveau égale à la valeur initiale.

4. Foyer de turbine selon la revendication 1 ou 2, dans lequel l'élément thermosensible est adapté pour fournir une énergie suffisante pour provoquer le déplacement de l'élément d'obturation à partir d'une position initiale, lorsque ledit élément thermosensible subit une première variation de température à partir d'une valeur initiale de température, et le système à ouverture variable comprend en outre au moins un organe de rappel, ledit organe de rappel étant adapté pour produire une énergie supplémentaire qui est suffisante pour provoquer un déplacement inverse de l'élément d'obturation lorsque ledit élément thermosensible subit une seconde variation de température, à la suite de la première variation de température et opposée à ladite première variation de température, de sorte que l'élément d'obturation se trouve de nouveau dans la position initiale lorsque la température de l'élément thermosensible est de nouveau égale à la valeur initiale.

5. Foyer de turbine selon la revendication 3, dans lequel l'élément thermosensible constitue au moins une partie d'une aube (2c) qui est portée par la couronne (2), en étant située dans le flux d'air provenant du système d'alimentation en air, et est adapté pour conférer à l'aube des inclinaisons ou des sens de courbure qui sont inverses entre au moins deux valeurs de la température de l'air qui provient du système d'alimentation en air, de façon à faire tourner la couronne par effort aérodynamique dans un premier sens ou dans un second sens opposé audit premier sens autour de la vrille (103) d'alimentation en air.

6. Foyer de turbine selon la revendication 4, dans lequel la couronne (2) porte au moins une aube (2c') qui est située dans le flux d'air provenant du système d'alimentation en air, et qui possède une inclinaison ou une courbure fixe de façon à faire tourner la couronne par effort aérodynamique vers une position de repos, pour former l'organe de rappel,
et l'élément thermosensible est disposé pour écarter la couronne de la position de repos, en faisant tourner ladite couronne à l'encontre de l'organe de rappel.

7. Foyer de turbine selon la revendication 5 ou 6, dans lequel le système à ouverture variable est agencé pour réduire la section ouverte du passage d'admission lorsque la température de l'air qui provient du système d'alimentation en air diminue, et pour augmenter ladite section ouverte du passage d'admission lorsque ladite température de l'air augmente.

8. Foyer de turbine comprenant un premier système à ouverture variable qui est disposé pour varier un débit d'entrée d'air de combustion, le foyer de turbine avec ledit premier système à ouverture variable étant conforme à l'une quelconque des revendications 1 à 7,
et le foyer de turbine comprenant en outre un second système à ouverture variable qui est disposé pour varier un débit d'entrée d'air de dilution qui provient du système d'alimentation en air et qui pénètre dans la chambre de combustion (101) à travers une paroi latérale de ladite chambre de combustion, par rapport à un écoulement général de l'air dans la chambre de combustion en fonctionnement,
le second système à ouverture variable comprenant :
. un passage d'admission disposé pour laisser entrer dans la chambre de combustion (101) le flux d'air provenant du système d'alimentation en air,
. un élément d'obturation mobile, dont un déplacement modifie une section ouverte du passage d'admission ; et
. un élément thermosensible, dont une forme varie en fonction d'une température dudit élément thermosensible, l'élément thermosensible étant disposé dans le flux d'air entre le système d'alimentation en air et le passage d'admission, et étant connecté à l'élément d'obturation de sorte qu'une déformation de l'élément thermosensible provoque le déplacement dudit élément d'obturation,
dans lequel le passage d'admission du second système à ouverture variable est agencé par rapport à la chambre de combustion (101) de sorte que l'air qui entre dans ladite chambre de combustion à travers ledit passage d'admission du second système à ouverture variable soit de l'air qui participe à une dilution des gaz effective à l'intérieur de la chambre de combustion,
et dans lequel les premier et second systèmes à ouvertures variables sont adaptés pour faire varier simultanément les sections ouvertes des passages d'admission respectifs desdits premier et second systèmes à ouvertures variables, selon des sens de variation qui sont opposés lorsque varie une température d'un flux d'air dans lequel sont disposés les éléments thermosensibles desdits premier et second systèmes à ouvertures variables.

9. Foyer de turbine selon la revendication 8, dans lequel, pour le second système à ouverture variable, l'élément thermosensible est adapté pour fournir une énergie suffisante pour provoquer le déplacement de l'élément d'obturation à partir d'une position initiale quelconque, lorsque ledit élément thermosensible subit une première variation de température à partir d'une valeur initiale de température, et est aussi adapté pour fournir ensuite une énergie supplémentaire qui est suffisante pour provoquer un déplacement inverse de l'élément d'obturation lorsque ledit élément thermosensible subit une seconde variation de température, à la suite de la première variation de température et opposée à ladite première variation de température, de sorte que l'élément d'obturation se trouve de nouveau dans la position initiale lorsque la température de l'élément thermosensible est de nouveau égale à la valeur initiale,
et l'élément thermosensible du second système à ouverture variable constitue une partie d'un levier (7) qui porte l'élément d'obturation, ou une partie d'un actionneur réversible qui est agencé pour déplacer l'élément d'obturation.

10. Foyer de turbine selon la revendication 9, dans lequel, pour le second système à ouverture variable, l'élément thermosensible constitue une partie d'un actionneur réversible qui est agencé pour déplacer l'élément d'obturation, en formant au moins une partie d'une aube (7') qui est située dans le flux d'air provenant du système d'alimentation en air, l'élément thermosensible étant adapté pour conférer à l'aube des inclinaisons ou des sens de courbure qui sont inverses entre au moins deux valeurs de la température de l'air qui provient du système d'alimentation en air, de façon à déplacer l'élément d'obturation par effort aérodynamique dans un premier sens ou dans un second sens opposé audit premier sens afin de varier réversiblement la section ouverte du passage d'admission.

11. Foyer de turbine selon la revendication 8, dans lequel, pour le second système à ouverture variable, l'élément thermosensible est adapté pour fournir une énergie suffisante pour provoquer le déplacement de l'élément d'obturation à partir d'une position initiale, lorsque ledit élément thermosensible subit une première variation de température à partir d'une valeur initiale de température, et le système à ouverture variable comprend en outre au moins un organe de rappel, ledit organe de rappel étant adapté pour produire une énergie supplémentaire qui est suffisante pour provoquer un déplacement inverse de l'élément d'obturation lorsque ledit élément thermosensible subit une seconde variation de température, à la suite de la première variation de température et opposée à ladite première variation de température, de sorte que l'élément d'obturation se trouve de nouveau dans la position initiale lorsque la température de l'élément thermosensible est de nouveau égale à la valeur initiale,
et un levier (7) qui porte l'élément d'obturation du second système à ouverture variable porte en outre au moins une aube (9) qui est située dans le flux d'air provenant du système d'alimentation en air, et qui possède une inclinaison ou une courbure fixe de façon à faire tourner le levier par effort aérodynamique vers une position de repos, pour former l'organe de rappel,
et l'élément thermosensible du second système à ouverture variable est disposé pour écarter le levier (7) de la position de repos, en faisant tourner ledit levier à l'encontre de l'organe de rappel.

12. Foyer de turbine selon l'une quelconque des revendications 9 à 11, dans lequel le second système à ouverture variable est agencé pour augmenter ou produire la section ouverte du passage d'admission lorsque la température de l'air qui provient du système d'alimentation en air diminue, et pour réduire ou supprimer ladite section ouverte du passage d'admission lorsque ladite température de l'air augmente.

13. Turbomachine comprenant un compresseur d'air (200), un foyer de turbine (100) qui est conforme à l'une quelconque des revendications précédentes, et une turbine (300), la turbomachine étant agencée de sorte que le compresseur constitue une source d'air pour le système d'alimentation en air du foyer de turbine, et de sorte que des gaz qui sont issus du foyer de turbine actionnent la turbine, la turbine entraînant le compresseur.

14. Turbomachine selon la revendication 13, formant partie d'un turboréacteur d'avion de ligne de transport commercial.

## Patentansprüche

1. Gasturbinenbrennkammer mit selbstanpassender variabler Geometrie, umfassend:
- eine Brennkammer (101);
- ein Luftzufuhrsystem, insbesondere für aus einem Kompressor (200) stammende Luft, welches dazu angeordnet ist, die Brennkammer (101) mit wenigstens einem Luftstrom zu versorgen, der eine variable Temperatur aufweist; und
- wenigstens ein System mit variabler Öffnung, umfassend:
- einen Einlasskanal, der dazu angeordnet ist, den aus dem Luftzufuhrsystem stammenden Luftstrom in die Brennkammer (101) eintreten zu lassen;
- ein bewegliches Verschlusselement, dessen Verlagerung einen offenen Abschnitt des Einlasskanals verändert; und
- ein temperaturempfindliches Element, dessen Form sich in Abhängigkeit von einer Temperatur des temperaturempfindlichen Elements ändert, wobei das temperaturempfindliche Element in dem Luftstrom zwischen dem Luftzufuhrsystem und dem Einlasskanal angeordnet ist und mit dem Verschlusselement verbunden ist, so dass eine Verformung des temperaturempfindlichen Elements die Verlagerung des Verschlusselements bewirkt,
wobei der Einlasskanal in Bezug auf die Brennkammer (101) derart angeordnet ist, dass Luft, die durch den Einlasskanal in die Brennkammer eintritt, Luft ist, die an der Verbrennung eines Brennstoffs in der Brennkammer teilnimmt, oder Luft, die an der effektiven Gasverdünnung innerhalb der Brennkammer teilnimmt, so dass die Turbinenbrennkammer selbstanpassend ist, um eine Verbrennungskonfiguration innerhalb der Brennkammer in Abhängigkeit von einer Betriebsdrehzahlleistung der Turbinenbrennkammer automatisch einzustellen,
wobei das System mit variabler Öffnung dazu angeordnet ist, eine Strömungsrate von Verbrennungsluft, die aus dem Luftzufuhrsystem stammt und die durch eine axial stromaufwärts der Brennkammer angeordneten Luftzufuhrschraube (103) in die Brennkammer (101) eintritt, relativ zu einer allgemeinen Strömungsrichtung (E) der Luft in der Brennkammer während des Betriebs zu verändern,
**dadurch gekennzeichnet, dass** das Verschlusselement eine Krone (2) mit Öffnungen (2a) umfasst, die die Luftzufuhrschraube seitlich umgibt, so dass die Öffnungen in Bezug auf Kanäle (103a) der Luftzufuhrschraube (103) ausgerichtet oder versetzt sind, um einen Zugangsabschnitt zu den Kanälen, der den offenen Abschnitt des Einlasskanals bildet, in einem Positionswinkel der Krone um die Luftzufuhrschraube herum zu verändern.

2. Turbinenbrennkammer nach Anspruch 1, wobei das temperaturempfindliche Element einen Teil einer Formgedächtnislegierung umfasst oder eine temperaturempfindliche Bimetall-Anordnung umfasst, wobei die Bimetall-Anordnung aus wenigstens zwei Materialteilen (2c₁, 2c₂; 7₁; 72) besteht, die jeweils unterschiedliche Werte eines Wärmeausdehnungskoeffizienten aufweisen und die miteinander verbunden sind, so dass eine relative Dimensionsänderung der beiden Materialteile, die durch eine Temperaturänderung, die das temperaturempfindliche Element erfährt, verursacht wird, die Verformung des temperaturempfindlichen Elements bewirkt.

3. Turbinenbrennkammer nach Anspruch 1 oder 2, wobei das temperaturempfindliche Element dazu ausgebildet ist, ausreichend Energie zu liefern, um die Verlagerung des Verschlusselements aus einer beliebigen Ausgangsposition zu bewirken, wenn das temperaturempfindliche Element eine erste Temperaturänderung von einem Ausgangstemperaturwert erfährt, und auch dazu ausgebildet ist, anschließend eine zusätzliche Energie zuzuführen, die ausreicht, um eine umgekehrte Verlagerung des Verschlusselements zu bewirken, wenn das temperaturempfindliche Element eine zweite Temperaturänderung erfährt, die der ersten Temperaturänderung folgt und der ersten Temperaturänderung entgegengesetzt ist, so dass sich das Verschlusselement wieder in der Ausgangsstellung befindet, wenn die Temperatur des temperaturempfindlichen Elements wieder gleich dem Ausgangswert ist.

4. Turbinenbrennkammer nach Anspruch 1 oder 2, wobei das temperaturempfindliche Element dazu ausgebildet ist, ausreichend Energie zu liefern, um die Verlagerung des Verschlusselements aus einer beliebigen Ausgangsposition zu bewirken, wenn das temperaturempfindliche Element eine erste Temperaturänderung von einem Ausgangstemperaturwert erfährt, und das System mit variabler Öffnung ferner wenigstens ein Rückstellelement umfasst, wobei das Rückstellelement dazu ausgebildet ist, eine zusätzliche Energie zu erzeugen, die ausreicht, um eine umgekehrte Verlagerung des Verschlusselements zu bewirken, wenn das temperaturempfindliche Element eine zweite Temperaturänderung erfährt, die auf die erste Temperaturänderung folgt und der ersten Temperaturänderung entgegengesetzt ist, so dass sich das Verschlusselement wieder in der Ausgangsstellung befindet, wenn die Temperatur des temperaturempfindlichen Elements wieder dem Ausgangswert entspricht.

5. Turbinenbrennkammer nach Anspruch 3, wobei das temperaturempfindliche Element wenigstens einen Teil einer Schaufel (2c) bildet, die von der Krone (2) getragen wird und sich im Luftstrom des Luftzufuhrsystems befindet, und dazu ausgebildet ist, der Schaufel Neigungen oder Krümmungsrichtungen zu verleihen, die zwischen wenigstens zwei Werten der Temperatur der aus dem Luftzufuhrsystem stammenden Luft entgegengesetzt sind, um die Krone durch aerodynamische Kraft in einer ersten Richtung oder in einer zweiten Richtung entgegengesetzt zur ersten Richtung um die Luftzufuhrschraube (103) zu drehen.

6. Turbinenbrennkammer nach Anspruch 4, wobei die Krone (2) wenigstens eine Schaufel (2c') trägt, die sich in dem vom Luftzufuhrsystem stammenden Luftstrom befindet und eine feste Neigung oder Krümmung aufweist, um die Krone durch aerodynamische Kraft in eine Ruhestellung zu drehen, um das Rückstellelement zu bilden,
und wobei das temperaturempfindliche Element dazu angeordnet ist, die Krone von der Ruhestellung zu entfernen, indem es die Krone gegen das Rückstellelement dreht.

7. Turbinenbrennkammer nach Anspruch 5 oder 6, wobei das System mit variabler Öffnung dazu angeordnet ist, die offene Fläche des Einlasskanals zu verringern, wenn die Temperatur der vom Luftzufuhrsystem stammenden Luft abnimmt, und die offene Fläche des Einlasskanals zu vergrößern, wenn die Lufttemperatur zunimmt.

8. Turbinenbrennkammer, welche ein erstes System mit variabler Öffnung umfasst, das dazu angeordnet ist, eine Strömungsrate von Verbrennungsluft zu verändern, wobei die Turbinenbrennkammer mit dem ersten System mit variabler Öffnung nach einem der Ansprüche 1 bis 7 ausgeführt ist,
und wobei die Turbinenbrennkammer ferner ein zweites System mit variabler Öffnung umfasst, das dazu angeordnet ist, eine Strömungsrate von Verdünnungsluft, die aus dem Luftzufuhrsystem stammt und durch eine Seitenwand der Brennkammer in die Brennkammer (101) eintritt, relativ zu einer allgemeinen Strömungsrate von Luft in der Brennkammer während des Betriebs zu verändern,
wobei das zweite System mit variabler Öffnung umfasst:
- einen Einlasskanal, der dazu angeordnet ist, den aus dem Luftzufuhrsystem stammenden Luftstrom in die Brennkammer (101) eintreten zu lassen,
- ein bewegliches Verschlusselement, dessen Verlagerung einen offenen Abschnitt des Einlasskanals verändert; und
- ein temperaturempfindliches Element, dessen Form sich abhängig von einer Temperatur des temperaturempfindlichen Elements verändert, wobei das temperaturempfindliche Element im Luftstrom zwischen dem Luftzufuhrsystem und dem Einlasskanal angeordnet ist und mit dem Verschlusselement verbunden ist, so dass eine Verformung des temperaturempfindlichen Elements eine Verlagerung des Verschlusselements bewirkt,
wobei der Einlasskanal des zweiten Systems mit variabler Öffnung relativ zur Brennkammer (101) so angeordnet ist, dass Luft, die durch den Einlasskanal des zweiten Systems mit variabler Öffnung in die Brennkammer eintritt, Luft ist, die an einer effektiven Gasverdünnung innerhalb der Brennkammer teilnimmt,
und wobei das erste und das zweite System mit variabler Öffnung dazu ausgebildet sind, die offenen Querschnitte derjeweiligen Einlasskanäle des ersten und des zweiten Systems mit variabler Öffnung gleichzeitig in Änderungsrichtungen zu verändern, die entgegengesetzt sind, wenn sich eine Temperatur eines Luftstroms, in dem die temperaturempfindlichen Elemente des ersten und des zweiten Systems mit variabler Öffnung angeordnet sind, verändert.

9. Turbinenbrennkammer nach Anspruch 8, wobei für das zweite System mit variabler Öffnung das temperaturempfindliche Element derart ausgebildet ist, dass es ausreichend Energie bereitstellt, um die Verlagerung des Verschlusselements aus einer beliebigen Ausgangsposition zu bewirken, wenn das temperaturempfindliche Element eine erste Temperaturänderung von einem Ausgangstemperaturwert erfährt, und ferner dazu ausgebildet ist, anschließend eine zusätzliche Energie zuzuführen, die ausreicht, um eine umgekehrte Verlagerung des Verschlusselements zu bewirken, wenn das temperaturempfindliche Element eine zweite Temperaturänderung erfährt, die auf die erste Temperaturänderung folgt und der ersten Temperaturänderung entgegengesetzt ist, so dass sich das Verschlusselement wieder in der Ausgangsstellung befindet, wenn die Temperatur des temperaturempfindlichen Elements wieder gleich dem Ausgangswert ist, und wobei das temperaturempfindliche Element des zweiten Systems mit variabler Öffnung einen Teil eines Hebels (7) bildet, der das Verschlusselement trägt, oder einen Teil eines reversiblen Aktuators, der dazu angeordnet ist, das Verschlusselement zu verlagern.

10. Turbinenbrennkammer nach Anspruch 9, wobei für das zweite System mit variabler Öffnung das temperaturempfindliche Element einen Teil eines reversiblen Aktuators bildet, der dazu angeordnet ist, das Verschlusselement zu verlagern, welches wenigstens einen Teil einer Schaufel (7') bildet, die sich in dem von dem Luftzufuhrsystem stammenden Luftstrom befindet, wobei das temperaturempfindliche Element dazu ausgebildet ist, der Schaufel Neigungen oder Krümmungsrichtungen zu verleihen, die zwischen wenigstens zwei Werten der Temperatur der aus dem Luftzufuhrsystem stammenden Luft entgegengesetzt sind, um das Verschlusselement durch aerodynamische Kraft in einer ersten Richtung oder in einer zweiten Richtung entgegengesetzt zu der ersten Richtung zu verlagern, um den offenen Abschnitt des Einlasskanals reversibel zu verändern.

11. Turbinenbrennkammer nach Anspruch 8, wobei für das zweite System mit variabler Öffnung das temperaturempfindliche Element dazu ausgebildet ist, ausreichend Energie bereitzustellen, um die Verlagerung des Verschlusselements aus einer Ausgangsposition zu bewirken, wenn das temperaturempfindliche Element eine erste Temperaturänderung von einem Ausgangstemperaturwert erfährt, und wobei das System mit variabler Öffnung ferner wenigstens ein Rückstellelement umfasst, wobei das Rückstellelement dazu ausgebildet ist, eine zusätzliche Energie zu erzeugen, die ausreicht, um eine umgekehrte Verlagerung des Verschlusselements zu bewirken, wenn das temperaturempfindliche Element eine zweite Temperaturänderung erfährt, die auf die erste Temperaturänderung folgt und zu der ersten Temperaturänderung entgegengesetzt ist, so dass sich das Verschlusselement wieder in der Ausgangsposition befindet, wenn die Temperatur des temperaturempfindlichen Elements wieder gleich dem Ausgangswert ist, und wobei ein Hebel (7), der das Verschlusselement des zweiten Systems mit variabler Öffnung trägt, ferner wenigstens eine Schaufel (9) trägt, die in dem von dem Luftzufuhrsystem stammenden Luftstrom angeordnet ist und die eine feste Neigung oder Krümmung aufweist, um den Hebel durch aerodynamische Kraft in eine Ruheposition zu drehen, um das Rückstellelement zu bilden,
und wobei das temperaturempfindliche Element des zweiten Systems mit variabler Öffnung dazu angeordnet ist, den Hebel (7) aus der Ruhestellung zu entfernen, indem der Hebel gegen das Rückstellelement gedreht wird.

12. Turbinenbrennkammer nach einem der Ansprüche 9 bis 11, wobei das zweite System mit variabler Öffnung dazu angeordnet ist, die offene Fläche des Einlasskanals zu vergrößern oder herzustellen, wenn die Temperatur der Luft aus dem Luftzufuhrsystem sinkt, und die offene Fläche des Einlasskanals zu verkleinern oder zu beseitigen, wenn die Lufttemperatur steigt.

13. Turbomaschine, umfassend einen Luftkompressor (200), eine Turbinenbrennkammer (100) nach einem der vorhergehenden Ansprüche und eine Turbine (300), wobei die Turbomaschine derart angeordnet ist, dass der Kompressor eine Luftquelle für das Luftzufuhrsystem der Turbinenbrennkammer bildet und dass aus der Turbinenbrennkammer stammende Gase die Turbine antreiben, wobei die Turbine den Kompressor antreibt.

14. Turbomaschine nach Anspruch 13, welche einen Teil eines Turbotriebwerks eines Verkehrsflugzeugs bildet.

## Claims

1. Self-adapting gas turbine firebox with variable geometry, comprising:
- a combustion chamber (101);
- an air supply system, in particular for supplying air exiting a compressor (200), arranged to supply the combustion chamber (101) with at least one stream of air having a variable temperature; and
- at least one system with variable opening, comprising:
. an intake passage, arranged to allow the stream of air coming from the air supply system to enter the combustion chamber (101),
. a movable closure member, which changes an open cross-sectional area of the intake passage when moved, and
. a thermosensitive member, having a shape which varies depending on a temperature of said thermosensitive member, the thermosensitive member being arranged in the stream of air between the air supply system and the intake passage, and being connected to the closure member so that a deformation of the thermosensitive member causes said closure member to move,
wherein the intake passage is arranged with respect to the combustion chamber (101) so that the air entering said combustion chamber through said intake passage is air that participates in the combustion of a fuel in the combustion chamber, or air that participates in a dilution of gases effective inside the combustion chamber, so that the turbine firebox is self-adapting for automatically adjusting a combustion configuration inside the combustion chamber, according to an operation power setting of the turbine firebox,
wherein the system with variable opening is arranged to vary an intake flow rate of combustion air coming from the air supply system and entering the combustion chamber (101) through an air supply swirler (103) located axially upstream of said combustion chamber, relative to a general direction (E) of the flow of air into the combustion chamber during operation,
**characterized in that** the closure member comprises a ring (2) with openings (2a) which laterally surrounds the air supply swirler, so that the openings are aligned or offset relative to channels (103a) of said air supply swirler (3), in order to vary a cross-sectional area of an access to said channels according to an angular position of the ring around the air supply swirler, forming the open cross-sectional area of the intake passage.

2. Turbine firebox according to claim 1, wherein the thermosensitive member comprises a portion made of a shape-memory alloy, or comprises a bimetal strip assembly, said bimetal strip assembly being composed of at least two portions (2c₁, 2c₂; 7₁; 7₁) made of materials which have different respective values for a coefficient of thermal expansion, and which are connected to each other so that a relative dimensional variation of said two portions of materials, caused by a change in temperature undergone by the thermosensitive member, produces the deformation of said thermosensitive member.

3. Turbine firebox according to claim 1 or 2, wherein the thermosensitive member is adapted to provide sufficient energy to cause the closure member to move from any initial position, when said thermosensitive member undergoes a first change in temperature from an initial temperature value, and is also adapted to then provide additional energy which is sufficient to cause a reverse movement of the closure member when said thermosensitive member undergoes a second change in temperature, following the first change in temperature and in the opposite direction to said first change in temperature, so that the closure member is once again in the initial position when the temperature of the thermosensitive member is again equal to the initial value.

4. Turbine firebox according to claim 1 or 2, wherein the thermosensitive member is adapted to provide sufficient energy to cause the closure member to move from an initial position, when said thermosensitive member undergoes a first change in temperature from an initial temperature value, and the system with variable opening further comprises at least one return member, said return member being adapted to produce additional energy which is sufficient to cause a reverse movement of the closure member when said thermosensitive member undergoes a second change in temperature, following the first change in temperature and in the opposite direction to said first change in temperature, so that the closure member is once again in the initial position when the temperature of the thermosensitive member is again equal to the initial value.

5. Turbine firebox according to claim 3, wherein the thermosensitive member constitutes at least a portion of a blade (2c) which is carried by the ring (2), located in the stream of air coming from the air supply system, and is adapted to impart tilts or directions of curvature to the blade which are the inverse of one another, between at least two temperature values of the air coming from the air supply system, so as to rotate the ring by aerodynamic force in a first direction or in a second direction opposite to said first direction around the air supply swirler (103).

6. Turbine firebox according to claim 4, wherein the ring (2) carries at least one blade (2c') which is located in the stream of air coming from the air supply system, and which has a fixed tilt or curvature so as to rotate the ring by aerodynamic force towards a rest position, to form the return member,
and the thermosensitive member is arranged to move the ring away from the rest position, by rotating said ring against the force of the return member.

7. Turbine firebox according to claim 5 or 6, wherein the system with variable opening is arranged to reduce the open cross-sectional area of the intake passage when the temperature of the air coming from the air supply system decreases, and to increase said open cross-sectional area of the intake passage when said air temperature increases.

8. Turbine firebox comprising a first system with variable opening which is arranged to vary an intake flow rate of combustion air, the turbine firebox with said first system with variable opening being in accordance with any one of claims 1 to 7, and the turbine firebox further comprising a second system with variable opening which is arranged to vary the intake flow rate of dilution air coming from the air supply system and entering the combustion chamber (101) through a side wall of said combustion chamber, relative to a general flow of air into the combustion chamber during operation,
the second system with variable opening comprising:
. an intake passage, arranged to allow the stream of air coming from the air supply system to enter the combustion chamber (101),
. a movable closure member, which changes an open cross-sectional area of the intake passage when moved, and
. a thermosensitive member, having a shape which varies depending on a temperature of said thermosensitive member, the thermosensitive member being arranged in the stream of air between the air supply system and the intake passage, and being connected to the closure member so that a deformation of the thermosensitive member causes the closure member to move,
wherein the intake passage of the second system with variable opening is arranged with respect to the combustion chamber (101) so that the air entering said combustion chamber through said intake passage of the second system with variable opening is air that participates in a dilution of the gases effective inside the combustion chamber,
and wherein the first and second systems with variable openings are adapted to simultaneously vary the open cross-sectional areas of the respective intake passages of said first and second systems with variable openings, in opposite variation directions when a temperature varies of a stream of air in which are arranged the thermosensitive members of said first and second systems with variable openings.

9. Turbine firebox according to claim 8, wherein, for the second system with variable opening, the thermosensitive member is adapted to provide sufficient energy to cause the closure member to move from any initial position, when said thermosensitive member undergoes a first change in temperature from an initial temperature value, and is also adapted to then provide additional energy which is sufficient to cause a reverse movement of the closure member when said thermosensitive member undergoes a second change in temperature, following the first change in temperature and in the opposite direction to said first change in temperature, such that the closure member is once again in the initial position when the temperature of the thermosensitive member is again equal to the initial value, and the thermosensitive member of the second system with variable opening constitutes a portion of a lever (7) which carries the closure member, or a portion of a reversible actuator which is arranged to move the closure member.

10. Turbine firebox according to claim 9, wherein, for the second system with variable opening, the thermosensitive member constitutes a portion of a reversible actuator which is arranged to move the closure member, forming at least a portion of a blade (7') which is located in the stream of air coming from the air supply system, the thermosensitive member being adapted to impart tilts or directions of curvature to the blade which are the inverse of one another, between at least two temperature values of the air coming from the air supply system, so as to move the closure member by aerodynamic force in a first direction or in a second direction opposite to said first direction in order to reversibly vary the open cross-sectional area of the intake passage.

11. Turbine firebox according to claim 8, wherein, for the second system with variable opening, the thermosensitive member is adapted to provide sufficient energy to cause the closure member to move from an initial position, when said thermosensitive member undergoes a first change in temperature from an initial temperature value, and the system with variable opening further comprises at least one return member, said return member being adapted to produce additional energy which is sufficient to cause a reverse movement of the closure member when said thermosensitive member undergoes a second change in temperature, following the first change in temperature and in the opposite direction to said first change in temperature, such that the closure member is once again in the initial position when the temperature of the thermosensitive member is again equal to the initial value,
and a lever (7) which carries the closure member of the second system with variable opening further carries at least one blade (9) which is located in the stream of air coming from the air supply system, and which has a fixed tilt or curvature so as to rotate the lever by aerodynamic force towards a rest position, to form the return member,
and the thermosensitive member of the second system with variable opening is arranged to move the lever (7) away from the rest position by rotating said lever against the force of the return member.

12. Turbine firebox according to any one of claims 9 to 11, wherein the second system with variable opening is arranged to increase or produce the open cross-sectional area of the intake passage when the temperature of the air coming from the air supply system decreases, and to reduce or eliminate said open cross-sectional area of the intake passage when said air temperature increases.

13. Turbomachine comprising an air compressor (200), a turbine firebox (100) that is in accordance with any one of the preceding claims, and a turbine (300), the turbomachine being arranged so that the compressor constitutes a source of air for the air supply system of the turbine firebox, and so that gases from the turbine firebox actuate the turbine, the turbine driving the compressor.

14. Turbomachine according to claim 13, forming part of a commercial airliner turbojet engine.
